# EUROPEAN PATENT SPECIFICATION

(11) **EP 4 293 861 B1**
(45) Date of publication and mention of the grant of the patent: **15.01.2025**
(21) Application number: 22206619.3
(22) Date of filing: 10.11.2022
(51) Int. Cl.: H02J 7/00, H02J 50/10, B60L 53/63, B60L 53/126, B60L 53/67

(54) **CHARGING MANAGEMENT APPARATUS, CHARGING MANAGEMENT METHOD, AND RECORDING MEDIUM STORING INSTRUCTIONS TO PERFORM CHARGING MANAGEMENT METHOD**
LADEMANAGEMENTGERÄT, LADEMANAGEMENTVERFAHREN UND AUFZEICHNUNGSMEDIUM MIT ANWEISUNGEN ZUR DURCHFÜHRUNG DES LADEMANAGEMENTVERFAHRENS
APPAREIL DE GESTION DE LA CHARGE, MÉTHODE DE GESTION DE LA CHARGE ET SUPPORT D'ENREGISTREMENT STOCKANT DES INSTRUCTIONS POUR L'EXÉCUTION DE LA MÉTHODE DE GESTION DE LA CHARGE

(30) Priority: 14.06.2022 KR 20220072420
(43) Date of publication of application: 20.12.2023
(73) Proprietor: SKC Co., Ltd., Suwon-si, Gyeonggi-do 16336 (KR)
(72) Inventor: KIM, Nah Young, 16338 Suwon-si, Gyeonggi-do (KR); JO, Yeon Jeong, 16338 Suwon-si, Gyeonggi-do (KR); LEE, Seung Hwan, 16338 Suwon-si, Gyeonggi-do (KR); KIM, Tae Kyoung, 16338 Suwon-si, Gyeonggi-do (KR)
(74) Representative: BCKIP Part mbB

(56) References cited:
- JP-A- 2019 096 104
- US-A1- 2014 191 033
- US-A1- 2015 380 971
- CHEN YANG ET AL: "Hybrid Topology With Configurable Charge Current and Charge Voltage Output-Based WPT Charger for Massive Electric Bicycles", IEEE JOURNAL OF EMERGING AND SELECTED TOPICS IN POWER ELECTRONICS, IEEE, PISCATAWAY, NJ, USA, vol. 6, no. 3, 1 September 2018 (2018-09-01), pages 1581 - 1594, XP011688256, ISSN: 2168-6777, [retrieved on 20180807], DOI: 10.1109/JESTPE.2017.2782269

## Description

### TECHNICAL FIELD

The present invention relates to a charging management apparatus and a charging management method. The present invention also relates to a computer-readable medium for storing instructions to perform the charging management method.

### BACKGROUND

Recently, as interest in eco-friendly means of transportation increases, mobility that can move based on eco-friendly power is attracting attention.

Mobility is a means of transportation that makes the movement of people and things more convenient, and it is satisfying a movement situation that requires a lot of time and effort even for a short distance. Mobility may include an electric scooter, an electric bicycle, an electric skateboard, or an electric scooter.

Such mobility may establish communication with a nearby charging station to receive wireless power from the charging station. For example, for wireless charging, the mobility may communicate with the charging station through a wireless data link using short-range communication (e.g., Wi-Fi). After the mobility identifies a charging station through a "pairing" process, wireless charging may be performed by receiving wireless power from the charging station.

However, if a plurality of mobilities are simultaneously wirelessly charged by parking in one charging station equipped with a plurality of docks, due to simultaneous wireless charging of the plurality of mobilities, charging overload may occur in the charging station.

Accordingly, even when a plurality of mobility devices are simultaneously wirelessly charged through one charging station, there is a need for a technology for managing simultaneous wireless charging without overloading the charging station.

US 2014/191033 A1 discloses a case for an electronic device, the case including a battery, an interface to receive electrical power from an external power source, a payment device reader, a product information input device, and a computer processor configured to execute computer-readable instructions. The computer processor executes the instructions to conduct communications with the electronic device, limit an amount of current of the received electrical power consumed by the case, allocate the amount of current among the battery and the electronic device based on the communications, read product information from a product using the product information input device, and read a payment device using the payment device reader, where the payment device is used to pay for the product.

JP 2019-096104 A discloses a vehicle management system for external charging of a plurality of vehicles.

### SUMMARY

The present invention was invented in view of the above background, and it is one object of the invention to provide a charging management apparatus and a charging management method in which the charging load of the charging station for each mobility can be appropriately adjusted if a large number of mobilities are wirelessly charged at the same time in one charging station.

To this end, the present invention provides a charging management apparatus in accordance with claim 1, a method in accordance with claim 7, and a computer-readable recording medium in accordance with claim 10.

In accordance with the present invention, there is provided a charging management apparatus. The charging management apparatus comprises: a charging station including a plurality of charging docks capable of loading a plurality of charging objects; a power supply configured to supply power for wireless charging to the plurality of charging docks in order to wirelessly charge the plurality of charging objects loaded in the charging station; and a controller configured to determine which charging mode to charge the plurality of charging objects among a constant current mode and a constant voltage mode based on a charging dock ratio in which wireless charging is being performed, and configured to control the power supply to charge the plurality of charging objects in the determined charging mode, when the power for wireless charging is supplied to the plurality of charging docks. The charging dock ratio is a ratio of a number of charging docks in which the plurality of charging objects are loaded and wireless charging is being performed to a total number of the plurality of charging docks.

According to the invention, the controller is configured to control that a voltage lower than a preset voltage of the constant voltage mode is applied to a charging dock being charged in the constant voltage mode among the plurality of charging docks, and to control a current to be maintained as it is with respect to a charging dock being charged in the constant current mode among the plurality of charging docks, when the charging dock ratio is equal to or greater than a preset first set ratio.

The charging management apparatus further may comprise an information input/output device through which a user inputs information necessary for charging the plurality of charging obj ects.

The controller may be configured to calculate the charging dock ratio, based on the information of the plurality of charging objects which is inputted through the information input/output device.

The charging management apparatus further comprises a transmitting module configured to transmit a signal for wireless connection with a receiving module of the plurality of charging objects to the receiving module.

The controller may be configured to stop the supply of the power for wireless charging to the charging dock being charged in the constant voltage mode among the plurality of charging docks, and to control the current to be maintained as it is for the charging dock being charged in the constant current mode among the plurality of charging docks, when the charging dock ratio is greater than or equal to a second set ratio higher than the first set ratio.

The controller may be configured to stop the supply of the power for wireless charging to the charging dock being charged in the constant voltage mode among the plurality of charging docks, and to control a current lower than the preset current of the constant current mode to be applied to the charging dock being charged in the constant current mode among the plurality of charging docks, when the charging dock ratio is greater than or equal to a third set ratio higher than the second set ratio.

Each of the plurality of charging objects may be a mobility device including a mobile means having a built-in battery capable of wireless charging.

In accordance with the present invention, there is provided a charging management method of a wireless charging apparatus, the method comprises: transmitting signals to a plurality of charging objects; if a wireless connection is made between the plurality of charging objects and a charging station, wirelessly transmitting power for wireless charging to the plurality of charging objects; calculating a charging dock ratio, which is a ratio of a number of charging docks in which the plurality of charging objects are loaded and wireless charging is being performed to a total number of the plurality of charging docks; and determining which charging mode to charge the plurality of charging objects among a constant current mode and a constant voltage mode based on the charging dock ratio in which wireless charging is being performed and controlling a power supply to charge the plurality of charging objects in the determined charging mode, when power for wireless charging is supplied to the plurality of charging docks.

The controlling the power supply to charge the plurality of charging objects in the determined charging mode comprises: applying a voltage lower than a preset voltage of the constant voltage mode to a charging dock being charged in the constant voltage mode among the plurality of charging dock, and maintaining a current as it is with respect to a charging dock being charged in the constant current mode among the plurality of charging docks, when the charging dock ratio is equal to or greater than a preset first set ratio.

The controlling the power supply to charge the plurality of charging objects in the determined charging mode may comprise: stopping the supply of the power for wireless charging to the charging dock being charged in the constant voltage mode among the plurality of charging docks, and maintaining the current as it is for the charging dock being charged in the constant current mode among the plurality of charging docks, when the charging dock ratio is greater than or equal to a second set ratio higher than the first set ratio.

The controlling the power supply to charge the plurality of charging objects in the determined charging mode may comprise: stopping the supply of the power for wireless charging to the charging dock being charged in the constant voltage mode among the plurality of charging docks, and applying a current lower than the preset current of the constant current mode to the charging dock being charged in the constant current mode among the plurality of charging docks, when the charging dock ratio is greater than or equal to a third set ratio higher than the second set ratio.

The calculating of the charging dock ratio comprises: checking the number of charging docks in which the plurality of charging objects are loaded and wireless charging is being performed; and calculating the charging dock ratio representing the ratio of the number of charging docks in which the wireless charging is being performed among the total number of the plurality of charging docks.

In accordance with the present invention, there is provided a computer-readable recording medium storing a computer program, comprising commands for a processor to perform a method, the method comprises: transmitting signals to a plurality of charging objects; if a wireless connection is made between the plurality of charging objects and a charging station, controlling the charging station to wirelessly transmit power for wireless charging to the plurality of charging objects; calculating a charging dock ratio, which is a ratio of a number of charging docks in which the plurality of charging objects are loaded and wireless charging is being performed to a total number of the plurality of charging docks; and determining which charging mode to charge the plurality of charging objects among a constant current mode and a constant voltage mode based on the charging dock ratio in which wireless charging is being performed and controlling a power supply to charge the plurality of charging objects in the determined charging mode, when power for wireless charging is supplied to the plurality of charging docks.

The controlling the power supply to charge the plurality of charging objects in the determined charging mode comprises: applying a voltage lower than a preset voltage of the constant voltage mode to a charging dock being charged in the constant voltage mode among the plurality of charging dock, and maintaining a current as it is with respect to a charging dock being charged in the constant current mode among the plurality of charging docks, when the charging dock ratio is equal to or greater than a preset first set ratio.

According to the present invention, when a plurality of mobility devices are parked in one charging station and wirelessly charged at the same time, the constant current mode or the constant voltage mode is adjusted based on the charging dock ratio of the charging station in which wireless power transmission is performed, thereby having an effect that it is possible to implement effective wireless charging without charging overload.

### BRIEF DESCRIPTION OF THE DRAWINGS

Fig. 1 is a block diagram showing a charging management system according to an embodiment of the present invention.
Fig. 2 is a block diagram illustrating a control flow of the charging management system according to the embodiment of the present invention.
Fig. 3 is a graph illustrating a constant current mode and a constant voltage mode in the charging management system according to the embodiment of the present invention.
Fig. 4 is a flowchart illustrating the charging management method according to the embodiment of the present invention.

### DETAILED DESCRIPTION

The advantages and features of the embodiments and the methods of accomplishing the embodiments will be clearly understood from the following description taken in conjunction with the accompanying drawings. However, embodiments are not limited to those embodiments described, as embodiments may be implemented in various forms. It should be noted that the present embodiments are provided to make a full disclosure and also to allow those skilled in the art to know the full range of the embodiments.

Terms used in the present specification will be briefly described, and the present invention will be described in detail.

In terms used in the present invention, general terms currently as widely used as possible while considering functions in the present invention are used. However, the terms may vary according to the intention or precedent of a technician working in the field, the emergence of new technologies, and the like. In addition, in certain cases, there are terms arbitrarily selected by the applicant, and in this case, the meaning of the terms will be described in detail in the description of the corresponding invention. Therefore, the terms used in the present invention should be defined based on the meaning of the terms and the overall contents of the present invention, not just the name of the terms.

When it is described that a part in the overall specification "includes" a certain component, this means that other components may be further included instead of excluding other components unless specifically stated to the contrary.

In addition, a term such as a "unit" or a "portion" used in the specification means a software component or a hardware component such as FPGA or ASIC, and the "unit" or the "portion" performs a certain role. However, the "unit" or the "portion" is not limited to software or hardware. The "portion" or the "unit" may be configured to be in an addressable storage medium, or may be configured to reproduce one or more processors. Thus, as an example, the "unit" or the "portion" includes components (such as software components, object-oriented software components, class components, and task components), processes, functions, properties, procedures, subroutines, segments of program code, drivers, firmware, microcode, circuits, data, database, data structures, tables, arrays, and variables. The functions provided in the components and "unit" may be combined into a smaller number of components and "units" or may be further divided into additional components and "units".

Hereinafter, the embodiment of the present invention will be described in detail with reference to the accompanying drawings so that those of ordinary skill in the art may easily implement the present invention. In the drawings, portions not related to the description are omitted in order to clearly describe the present invention.

Hereinafter, a detailed configuration of the charging management system according to an embodiment of the present invention will be described with reference to the drawings.

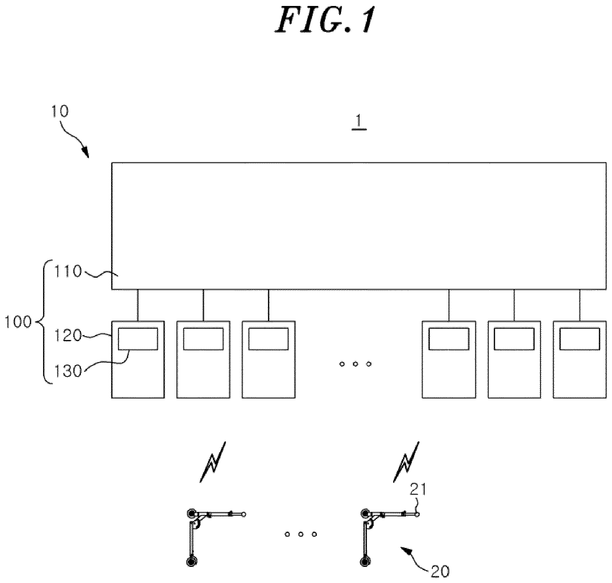

Fig. 1 is a block diagram showing a charging management system according to an embodiment of the present invention.

The charging management system 10 according to the embodiment of the present invention simultaneously wirelessly charges a plurality of mobilities at a charging station. The charging management system 10 adjusts a charging load for each mobility according to a charging dock ratio of the charging station, so that the plurality of mobilities can be managed to implement effective simultaneous wireless charging in one charging station without charging overload.

Here, the mobility 20 may be a mobile means in which a battery capable of wireless charging is built-in. In this embodiment, although the mobility 20 is described as an electric kickboard, the mobility 20 may include various types of transport means in addition to the electric kickboard. For example, the mobility may be an electric bicycle, an electric skateboard, an electric scooter, or an electric vehicle.

The mobility 20 may provide an alarm function to the user's mobile device (e.g., a mobile phone) or may inform the user of low battery status through a display provided in the mobility, when charging is required, for example, when the battery capacity of the mobility is 30% or less. In this case, the mobility may provide a navigation function for guiding the shortest route to the point where the charging station is located.

Hereinafter, the charging station according to the embodiment of the present invention will be described in detail.

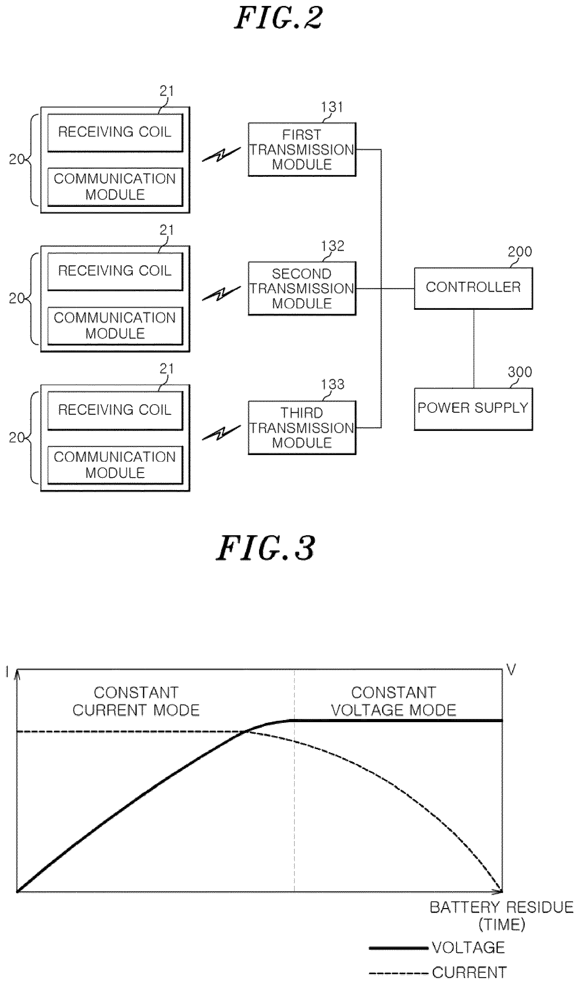

Referring to Figs. 1 to 3, the charging station 100 receives power from the power supply 300 to wirelessly charge the mobility 20. The charging management system 10 includes a charging station 100, a controller 200, a power supply 300 and a communicator (not shown), and the mobility 20 may include a receiving coil 21, a battery circuitally connected with the receiving coil 21, and a mobility communication module capable of communicating with the communicator of the charging management system 10.

The charging station 100 may include a station body 110, a charging dock 120, and a transmission module 130.

According to the invention, the station body 110 includes a plurality of charging docks 120 that may be spaced apart from each other in the longitudinal direction. In the drawing according to the present embodiment, the plurality of charging docks 120 are disposed to be spaced apart from each other in the longitudinal direction on the station body 110, but the present invention is not limited thereto. The arrangement structure of the charging dock 120 with respect to the station body 110 may be changed to an optimal arrangement form in which parking and wireless charging of the mobility 20 can be efficiently implemented.

The charging dock 120 may be understood as a concept of a space in which the mobility 20 can park. Since a plurality of charging docks 120 are provided in the station body 110, a plurality of mobilities 20 may be respectively parked in the plurality of charging docks 120. If the mobility 20 is positioned adjacent to the charging dock 120 of the charging station 100, a predetermined transmission voltage Vout and a transmission current Iout are applied at the charging station through the transmission module 130, thereby power may be transmitted to the mobility 20.

The transmission module 130 is provided in the charging dock 120 to generate an electromagnetic field, so that the mobility 20 in the parking state can be wirelessly charged. To this end, the transmission module 130 may include a wireless charging coil (primary coil) that receives power from the power supply 300 to generate an electromagnetic field, and a charging pad that covers the wireless charging coil.

The transmission module 130 may be in plural number (e.g., the first transmission module 131, the second transmission module 132, and the third transmission module 133) capable of wirelessly charging the mobility 20 in the parking state. In a state in which the mobility 20 is parked in the charging dock 120, if power is supplied to the wireless charging coil from the power supply 300, an electromagnetic induction by an electromagnetic field is generated in the wireless charging coil, and the power receiver (secondary coil) of the mobility 20 may charge the battery of the mobility 20 using an induced current generated by the electromagnetic induction.

The transmission module 130 may be provided in the charging dock 120, and may transmit power to the receiving coil 21 of the mobility 20 by applying a predetermined voltage Vout and a predetermined current Iout to the charging dock. When the mobility 20 is not parked in the charging dock 120, the voltage Vout and the current Iout in the transmission module 130 may be 0, respectively.

In this embodiment, the transmission module 130 has been described as consisting of a wireless charging coil and a charging pad, but the main configuration of the transmission module 130 is not limited to the wireless charging coil and the charging pad, and the transmission module 130 may further include other components necessary for efficient wireless charging along with stable parking of the mobility 20.

In addition, the mobility 20 may figure out a charging dock 120 that is chargeable from among the plurality of charging docks 120 of the charging station 100 using short-range wireless communication (e.g., Bluetooth pairing) or GPS (Global Positioning System).

In addition, when all of the plurality of charging docks 120 provided in the charging station 100 are wirelessly charging, the mobility 20 may determine the charging completion time (expected standby time) of the mobility 20 being charged in each charging dock 120, through a short-range wireless communication with the charging station 100. In addition, assuming that the mobility 20 is charged in the charging dock 120, the mobility 20 may determine in advance the expected charging completion time through the corresponding charging dock 120.

The mobility 20 may receive wireless power from the charging station 100. For example, when the mobility 20 is docked in the charging dock 120 of the charging station 100, and the mobility 20 and the charging dock 120 are disposed to face each other, the wireless charging coil (primary coil) of the charging dock 120 may wirelessly transmit electrical energy by electromagnetic induction with the power receiver (secondary coil) of the mobility 20. The electric energy received by the mobility 20 may be used to charge the battery of the mobility 20.

When wireless power transmission is performed between the plurality of mobilities 20 and the charging dock 120, the controller 200 calculates a charging dock ratio of the charging station 100 in which wireless power transmission is performed.

Here, the 'charging dock ratio' is understood as a ratio in which a plurality of mobilities 20 are parked among the plurality of charging docks 120 to perform wireless power transmission, that is, a ratio of the plurality of mobilities in which wireless power transmission is performed with respect to the plurality of charging docks 120. For example, if seven mobilities 20 are parked and wireless power is transmitted in the charging station 100 provided with ten charging docks 120, the charging dock ratio would be 70%.

Also, the charging station 100 may include an information input/output device that displays information on whether the mobility 20 is parked in the charging station 100 among the plurality of charging docks 120. Such an information input/output device may be understood as a terminal into which information necessary for charging the mobility 20 may be input by a user. For example, the information input/output device may be a touch display terminal. If all of the plurality of charging docks are charging, the expected charging completion time of the mobility 20 for each charging dock 120 may be displayed on the information input/output device.

However, the present invention is not necessarily limited thereto, and the user may provide information necessary for charging the mobility 20 to the charging station 100 using the provided application that can be installed in a terminal such as a mobile phone as well as the above-described information input/output device.

The controller 200 controls the power supply 300 so that the transmission module 130 wirelessly charges the mobility 20 in a constant current mode or a constant voltage mode. The constant current mode may be understood as a mode in which electric energy of a constant current is applied to the transmission module 130 regardless of time. In the constant current mode, the current is constant, but as the amount of charge (charge time) of the battery increases, the voltage flowing through the wireless charging coil may increase. The controller 200 may obtain information on how much the battery of the mobility 20 is charged by communicating with the mobility communication module through the communicator, and may control the transmission module 130 to charge in a constant current mode if the charge amount of the battery is equal to or less than a first reference, and to charge in a constant voltage mode if the charge amount of the battery is greater than a second reference.

In the drawings according to the present embodiment, the first reference and the second reference are shown to be the same, but the disclosure is not limited thereto, and thus the second reference may be greater than the first reference. In case that the second reference is greater than the first reference, if the charging amount of the battery is between the first reference and the second reference, it may be controlled so that the current decreases in proportion to the current in the constant current mode and the voltage increases in proportion to the voltage in the first reference as the amount of charge is greater than that of the first reference. The current at which the amount of charge increases proportionally between the first reference and the second reference may be gradually decreased to the current at the second reference, and the voltage at which the amount of charge increases proportionally between the first reference and the second reference may be gradually increased up to the voltage at the second reference (the voltage in the constant voltage mode).

If the number of charging stations 100 being charged in the plurality of charging stations 100 is relatively small, the controller 200 applies electrical energy to the transmission module 130 in a constant current mode with a constant current at a normal current value, and if there are relatively many charging stations 100 being charged, the current power supply 300 may be controlled so that the electric energy is applied to the transmission module 130 in a constant current mode in which the current is constant at a reduced current value. The reduced current value may be a single value, but a plurality of values may also be input.

The constant voltage mode may be understood as a mode in which electric energy of a constant voltage is applied to the transmission module 130 regardless of time. In the constant voltage mode, the voltage is constant, but as the amount of charge (charging time) of the battery increases, the current flowing through the wireless charging coil may decrease. In addition, if the number of charging stations 100 being charged among the plurality of charging stations 100 is relatively small, the controller 200 applies electrical energy to the transmission module 130 in a constant voltage mode with a constant voltage at a normal voltage value, and if there are relatively many charging stations 100 being charged, the power supply 300 may be controlled so that the electric energy is applied to the transmission module 130 in a constant voltage mode with a constant voltage at a reduced voltage value. The reduced voltage value may be a single value, but a plurality of values may also be input.

In addition, the controller 200 may control the power supply 300 such that as the number of the charging docks 120 in which the mobility 20 is parked increases among the plurality of charging docks 120, the voltage output Vout and the current output Iout of the transmission module 130 provided in each charging dock 120 decrease.

Since the controller 200 can control whether the transmission module 130 transmits power, it is also possible to determine the number of the transmission modules 130 that transmit power to the mobility 20 among the transmission modules 130 provided in the plurality of charging docks 120. In other words, the controller 200 may calculate the ratio of the charging docks being charged among all the charging docks 120 based on the information required for charging the mobility 20 input to the information input/output device, and it is possible to determine which mode of the charging dock 120 to charge in the constant current mode or in the constant voltage mode using the calculated charging dock ratio.

The controller 200 controls the current and the voltage applied to the transmission module 130 according to the ratio of the charging docks being charged among all the charging docks 120. For example, if the number of charging stations 100 being charged in the mobility 20 among the plurality of charging stations 100 is relatively small, the charging speed may be accelerated by applying a large amount of electrical energy to all or some of the transmission modules 130 among the plurality of transmission modules 130, and if the number of charging stations 100 being charged in the mobility 20 among the plurality of charging stations 100 is relatively large, by applying a small amount of electrical energy to all or some of the transmission modules 130 among the plurality of transmission modules 130, it is possible to lower the overall electrical load of the charge management system 10 instead of slowing the charging speed.

For example, when there are many transmission modules 130 being charged, the controller 200 may control the charging speed of all the mobilities 20 parked in the charging docks 120 by performing a control to allow a constant current to flow at a first reduced current value to the transmission module 130 placed in the constant current mode, and a control to allow a constant voltage to be applied at a first reduced voltage value to the transmission module 130 placed in the constant voltage mode, selectively or in parallel. Accordingly, the controller 200 may allow the mobility 20 that is relatively low-charged to be charged quickly, and the mobility 20 that is relatively high-charged may be charged slowly.

As a more detailed example which is not covered by the appended claims, when a first restriction condition is input to the controller 200 in advance, and the first restriction condition is that the charging dock ratio is greater than a preset first set ratio (for example, 60%), if the first restriction condition is not satisfied (that is, when the charging dock ratio is less than or equal to the first set ratio), the controller 200 may charge all the mobilities 20 parked in the charging docks 120 at a high speed by flowing a constant current of a normal current value to the transmission module 130 placed in the constant current mode and by applying a constant voltage at a normal voltage value to the transmission module 130 placed in the constant voltage mode.

In addition, if the first restriction condition is satisfied (that is, when the charging dock ratio is greater than the first set ratio), the controller 200 may charge the mobility 20 in which the charging amount of the battery is less than or equal to the first reference with the first reduced current value in the constant current mode, and may charge the mobility 20 in which the charging amount of the battery is greater than the second reference with the normal voltage value in the constant voltage mode.

In addition, a second restriction condition may be input to the controller 200 in advance. When the second restriction condition is that the charging dock ratio is greater than the second set ratio (for example, 70%) set to be larger than the first set ratio, if the second restriction condition is satisfied (that is, the charging dock ratio is greater than the second set ratio), the controller 200 may charge the mobility 20 in which the charging amount is equal to or less than the first reference in the constant current mode with the second reduced current value set to be smaller than the first reduced current value, and may charge the mobility 20 in which the charging amount is greater than the second reference in the constant voltage mode with the first reduced voltage value. If the second restriction condition is set, the first restriction condition is changed that the charging dock ratio is greater than the preset first set ratio and is less than or equal to the second set ratio.

In addition, the third restriction condition may be further input to the controller 200 in advance. When the third restriction condition is that the charging dock ratio is greater than the third set ratio (e.g., 80%) set to be larger than the second set ratio, if the third restriction condition is satisfied (that is, the charging dock ratio is greater than the third set ratio), the controller 200 may charge the mobility 20 in which the charging amount of the battery is less than or equal to the first reference in the constant current mode with the third reduced current value set to be smaller than the second reduced current value, and may charge the mobility 20 in which the charging amount of the battery is greater than the second reference in the constant voltage mode with a second reduced voltage value set to be smaller than the first reduced voltage value. The above given examples are not covered by the appended claims.

On the other hand, in the above embodiment, it has been described that the controller 200 controls the current and voltage applied to the transmission module 130 according to the ratio of the charging docks being charged among all the charging docks 120. As another example, which is not covered by the claimed invention, the controller 200 may control the current and voltage applied to the transmission module 130 based on the electrical energy applied to the entire charging docks 120. In this case, the first restriction condition described above may be changed to be that the electrical energy used in the entire plurality of charging docks 120 is greater than a first threshold value, and the second and third restriction conditions may be changed to be that the electrical energy used in the entire plurality of charging docks 120 is greater than a second and a third threshold values.

The controller 200 may be implemented by a computing device including a microprocessor, and since the implementation method is obvious to those skilled in the art, further detailed description will be omitted. Further, the controller 200 may be provided inside the charging station 100, but the present invention is not necessarily limited thereto, and the controller 200 may be provided separately from the charging station to remotely control the charging station from the outside.

Hereinafter, a charging management method of the charging management system according to the embodiment of the present invention will be described.

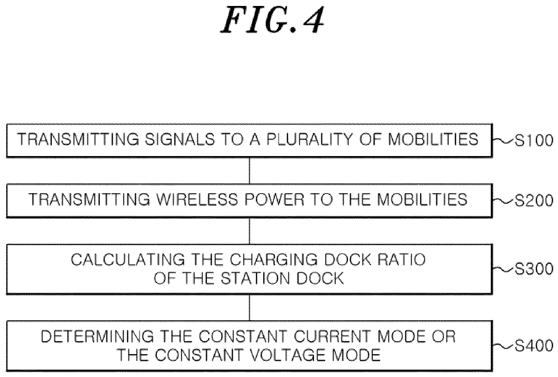

Fig. 4 is a flowchart illustrating the charging management method of the charging management system according to the embodiment of the present invention.

Referring to Fig. 4, the charging management method of the charging management system includes transmitting a signal to a plurality of mobilities (S100), wirelessly transmitting power to the mobilities (S200), calculating the charging dock ratio of the charging station (S300), and determining a constant current mode or a constant voltage mode (S400).

In step S 100 of transmitting the signal to the plurality of mobilities, the transmission module of the charging station may transmit the signal to the plurality of mobilities. The signal transmitted from the transmission module may be at least one of a voltage output Vout or a current output Iout.

The transmission value of the voltage output Vout or the current output Iout transmitted from the transmission module of the charging dock in which the mobility is not parked may be 0, respectively. In addition, as the number of charging docks in which the mobility is parked increases, the transmission value of the voltage output Vout or the current output Iout transmitted from the transmission module of the charging station may be increased.

In addition, when the transmission value of the voltage output Vout or current output Iout transmitted from the transmission module is relatively larger than the transmission value of the voltage output Vout or current output Iout of another charging station, the charging station with a relatively large transmission value of the voltage output Vout or the current output Iout may be the charging station with relatively more charging docks in which the mobility is not parked (the charging station having relatively more charging docks capable of wireless charging for the mobility 20). Accordingly, the mobility may select a charging station having a larger transmission value of the voltage output Vout or the current output Iout after comparing the transmission values of the voltage output or the current output transmitted from the transmission module.

Thereafter, among the plurality of charging docks, whether the mobility 20 is parked may be checked through an information input/output device in which information required for charging the mobility is input by the user.

In the step of wirelessly transmitting power to the mobility (S200), if the mobility is parked in the charging station, a wireless connection may be made between the charging station and the plurality of mobilities. If the wireless communication link between the charging station and the mobility is completed, wireless power may be transmitted between the mobility and the charging station.

In the step of calculating the charging dock ratio of the charging station (S300), while the wireless power is transmitted between the mobility and the charging station, the charging dock ratio of the charging station in which the wireless power transmission is performed is calculated. The charging dock ratio is understood as a ratio in which a plurality of mobilities are parked among a plurality of charging docks to perform the wireless power transmission.

In the step of determining the constant current mode or the constant voltage mode (S400), the controller 200 determines whether to charge in the constant current mode or the constant voltage mode of the charging station based on the calculated charging dock ratio.

The following described implementations are not covered by the appended claims, in the step of adjusting the constant current mode or the constant voltage mode (S400), if the charging dock ratio is greater than a preset first set ratio (for example, 60%), the controller 200 applies a current having a first reduced current value to the charging dock being charged in the constant mode among the plurality of charging docks, and applies a voltage having a normal voltage value to the charging dock being charged in the constant voltage mode. In addition, if it is greater than a second set ratio (for example, 70%) set larger than the first set ratio, the controller 200 applies a current of a second reduced current value to the charging dock being charged in the constant current mode among the plurality of charging docks, and applies a voltage of a first reduced voltage value to the charging dock being charged in the constant voltage mode. In addition, if the charging dock ratio is greater than a third set ratio (e.g., 80%) higher than the second set ratio, the controller 200 may apply a current of a third reduced current value to the charging dock being charged in the constant current mode among the plurality of charging docks, and may apply a voltage of a second reduced voltage value to the charging dock being charged in the constant voltage mode.

In the present invention, when a plurality of mobilities are parked in one charging station and wirelessly charged, a constant current mode or a constant voltage mode is selected and charged based on the charging dock ratio of the charging station in which wireless power transmission is performed, thereby it is possible to provide an excellent advantage of implementing effective wireless charging.

Combinations of steps in each flowchart attached to the present invention are executed by computer program instructions. Since the computer program instructions can be mounted on a processor of a general-purpose computer, a special purpose computer, or other programmable data processing equipment, the instructions executed by the processor of the computer or other programmable data processing equipment create a means for performing the functions described in each step of the flowchart. The computer program instructions are also stored on a computer-usable or computer-readable storage medium which can be directed to a computer or other programmable data processing equipment to implement a function in a specific manner. Accordingly, the instructions stored on the computer-usable or computer-readable recording medium can also produce an article of manufacture containing an instruction means which performs the functions described in each step of the flowchart. The computer program instructions can also be mounted on a computer or other programmable data processing equipment. Accordingly, a series of operational steps are performed on a computer or other programmable data processing equipment to create a computer-executable process, and it is also possible for instructions to perform a computer or other programmable data processing equipment to provide steps for performing the functions described in each step of the flowchart.

In addition, each step may represent a module, a segment, or a portion of codes which contains one or more executable instructions for executing the specified logical function(s). It should also be noted that in some alternative embodiments, not covered by the appended claims, the functions mentioned in the steps may occur out of order. For example, two steps illustrated in succession may in fact be performed substantially simultaneously, or the steps may sometimes be performed in a reverse order depending on the corresponding function.

The above description is merely an exemplary description of the present invention, and it will be understood by those skilled in the art that various changes and modifications can be made within the scope of the invention which is solely defined by the appended claims. Therefore, the embodiments disclosed in the present invention are intended to explain, not to limit, the present invention, and the scope of the present invention is not limited by the embodiments, but by the appended claims. The protection scope of the present invention is solely defined by the following claims.

## Claims

1. A charging management apparatus, comprising:
a charging station (100) including a plurality of charging docks (120) which are configured to load a plurality of charging objects;
a power supply (300) configured to supply power for wireless charging to the plurality of charging docks (120) in order to wirelessly charge the plurality of charging objects loaded in the charging station (100); and
a controller (200) configured to determine which charging mode to charge the plurality of charging objects among a constant current mode and a constant voltage mode based on a charging dock ratio in which wireless charging is being performed, and configured to control the power supply (300) to charge the plurality of charging objects in the determined charging mode, when the power for wireless charging is supplied to the plurality of charging docks (120),
wherein the charging dock ratio is a ratio of a number of charging docks (120) in which the plurality of charging objects are loaded and wireless charging is being performed to a total number of the plurality of charging docks (120),
**characterized in that**
the controller (200) is configured to control that a voltage lower than a preset voltage of the constant voltage mode is applied to a charging dock (120) being charged in the constant voltage mode among the plurality of charging docks (120), and to control a current to be maintained as it is with respect to a charging dock (120) being charged in the constant current mode among the plurality of charging docks (120), when the charging dock ratio is equal to or greater than a preset first set ratio.

2. The charging management apparatus of claim 1, further comprising:
an information input/output device configured to input information necessary for charging the plurality of charging objects by an user,
wherein the controller (200) is configured to calculate the charging dock ratio, based on the information of the plurality of charging objects which is inputted through the information input/output device.

3. The charging management apparatus of claim 1 or 2, further comprising
a transmitting module configured to transmit a signal for wireless connection with a receiving module of the plurality of charging objects to the receiving module.

4. The charging management apparatus of any one of claims 1 to 3, wherein the controller (200) is configured to stop the supply of the power for wireless charging to the charging dock (120) being charged in the constant voltage mode among the plurality of charging docks (120), and to control the current to be maintained as it is for the charging dock (120) being charged in the constant current mode among the plurality of charging docks (120), when the charging dock ratio is greater than or equal to a second set ratio higher than the first set ratio.

5. The charging management apparatus of claim 4, wherein the controller (200) is configured to stop the supply of the power for wireless charging to the charging dock (120) being charged in the constant voltage mode among the plurality of charging docks (120), and to control a current lower than the preset current of the constant current mode to be applied to the charging dock (120) being charged in the constant current mode among the plurality of charging docks (120), when the charging dock ratio is greater than or equal to a third set ratio higher than the second set ratio.

6. The charging management apparatus of any one of claims 1 to 5, wherein each of the plurality of charging objects is a mobility device including a mobile means having a built-in battery, the apparatus being configured to wireless charge said built-in batteries.

7. A charging management method of a wireless charging apparatus, comprising:
transmitting (S100) signals to a plurality of charging objects;
wirelessly transmitting (S200) power for wireless charging to the plurality of charging objects, when a wireless connection is made between the plurality of charging objects and a charging station (100);
calculating (S300) a charging dock ratio, which is a ratio of a number of charging docks (120) in which the plurality of charging objects are loaded and wireless charging is being performed to a total number of the plurality of charging docks (120);
determining (400) which charging mode to charge the plurality of charging objects among a constant current mode and a constant voltage mode based on the charging dock ratio in which wireless charging is being performed and
controlling a power supply to charge the plurality of charging objects in the determined charging mode, when power for wireless charging is supplied to the plurality of charging docks (120),
**characterized in that**
controlling the power supply to charge the plurality of charging objects in the determined charging mode comprises:
applying a voltage lower than a preset voltage of the constant voltage mode to a charging dock (120) being charged in the constant voltage mode among the plurality of charging dock (120), and maintaining a current as it is with respect to a charging dock (120) being charged in the constant current mode among the plurality of charging docks (120), when the charging dock ratio is equal to or greater than a preset first set ratio.

8. The method of claim 7, wherein controlling the power supply to charge the plurality of charging objects in the determined charging mode comprises: stopping the supply of the power for wireless charging to the charging dock (120) being charged in the constant voltage mode among the plurality of charging docks (120), and maintaining the current as it is for the charging dock (120) being charged in the constant current mode among the plurality of charging docks (120), when the charging dock ratio is greater than or equal to a second set ratio higher than the first set ratio.

9. The method of claim 8, wherein controlling the power supply to charge the plurality of charging objects in the determined charging mode comprises: stopping the supply of the power for wireless charging to the charging dock (120) being charged in the constant voltage mode among the plurality of charging docks (120), and applying a current lower than the preset current of the constant current mode to the charging dock (120) being charged in the constant current mode among the plurality of charging docks (120), when the charging dock ratio is greater than or equal to a third set ratio higher than the second set ratio.

10. A computer-readable recording medium storing a computer program, comprising commands for a processor to perform a method, the method comprising:
transmitting signals to a plurality of charging objects;
controlling a charging station to wirelessly transmit power for wireless charging to the plurality of charging objects, when a wireless connection is made between the plurality of charging objects and the charging station (100);
calculating a charging dock ratio, which is a ratio of a number of charging docks (120) in which the plurality of charging objects are loaded and wireless charging is being performed to a total number of the plurality of charging docks (120);determining (400) which charging mode to charge the plurality of charging objects among a constant current mode and a constant voltage mode based on the charging dock ratio in which wireless charging is being performed and
controlling a power supply to charge the plurality of charging objects in the determined charging mode, when power for wireless charging is supplied to the plurality of charging docks (120),
**characterized in that** controlling the power supply to charge the plurality of charging objects in the determined charging mode includes: applying a voltage lower than a preset voltage of the constant voltage mode to a charging dock (120) being charged in the constant voltage mode among the plurality of charging docks (120), and maintaining a current as it is with respect to a charging dock (120) being charged in the constant current mode among the plurality of charging docks (120), when the charging dock ratio is equal to or greater than a preset first set ratio.

## Patentansprüche

1. Lademanagementvorrichtung, aufweisend:
eine Ladestation (100) mit einer Vielzahl von Ladedocks (120), die dazu eingerichtet sind, mit einer Vielzahl von Ladeobjekten beladen zu werden;
eine Energieversorgung (300), die dazu eingerichtet ist, die Vielzahl von Ladedocks (120) mit Energie zum drahtlosen Laden zu versorgen, um die Vielzahl von Ladeobjekten, mit denen die Ladestation (100) beladen sind, drahtlos zu laden; und
eine Steuerungsvorrichtung (200), die dazu eingerichtet ist, basierend auf einem Ladedockverhältnis, bei dem ein drahtloses Laden durchgeführt wird, zu bestimmen, in welchem Lademodus aus einem Konstantstrommodus und einem Konstantspannungsmodus die Vielzahl von Ladeobjekten zu laden ist, die und dazu eingerichtet ist, die Energieversorgung (300) zu steuern, um die Vielzahl von Ladeobjekten in dem bestimmten Lademodus zu laden, wenn die Energie zum drahtlosen Laden der Vielzahl von Ladedocks (120) zugeführt wird,
wobei das Ladedockverhältnis ein Verhältnis einer Anzahl von Ladedocks (120), die mit der Vielzahl von Ladeobjekten beladen sind und in denen ein drahtloses Laden durchgeführt wird, zu einer Gesamtanzahl der Vielzahl von Ladedocks (120) ist,
**dadurch gekennzeichnet, dass**
die Steuerungsvorrichtung (200) dazu eingerichtet ist, zu steuern, dass eine Spannung, die niedriger als eine voreingestellte Spannung des Konstantspannungsmodus ist, an ein Ladedock (120) aus der Vielzahl von Ladedocks (120) angelegt wird, das in dem Konstantspannungsmodus geladen wird, und einen Strom in Bezug auf ein Ladedock (120) aus der Vielzahl von Ladedocks (120), das in dem Konstantstrommodus geladen wird, so zu steuern, dass dieser beibehalten wird wie er ist, wenn das Ladedockverhältnis gleich oder größer einem voreingestellten erstes eingestellten Verhältnis ist.

2. Lademanagementvorrichtung nach Anspruch 1, zusätzlich aufweisend:
eine Informationseingabe-/-ausgabevorrichtung, die dazu eingerichtet ist, Informationen durch einen Benutzer einzugeben, die zum Laden der Vielzahl von Ladeobjekten notwendig sind,
wobei die Steuerungsvorrichtung (200) dazu eingerichtet ist, das Ladedockverhältnis basierend auf den Informationen der Vielzahl von Ladeobjekten zu berechnen, die durch die Informationseingabe-/-ausgabevorrichtung eingegeben werden.

3. Lademanagementvorrichtung nach Anspruch 1 oder 2, zusätzlich aufweisend:
ein Übertragungsmodul, das dazu eingerichtet ist, ein Signal zum drahtlosen Verbinden mit einem Empfangsmodul der Vielzahl von Ladeobjekten an das Empfangsmodul zu übertragen.

4. Lademanagementvorrichtung nach einem der Ansprüche 1 bis 3, wobei die Steuerungsvorrichtung (200) dazu eingerichtet ist, die Energiezufuhr zum drahtlosen Laden an das Ladedock (120) aus der Vielzahl von Ladedocks (120), das in dem Konstantspannungsmodus geladen wird, zu stoppen und den Strom in Bezug auf das Ladedock (120) aus der Vielzahl von Ladedocks (120), das in dem Konstantstrommodus geladen wird, so zu steuern, dass dieser beibehalten wird wie er ist, wenn das Ladedockverhältnis größer oder gleich einem zweiten eingestellten Verhältnis ist, das größer als das erste eingestellte Verhältnis ist.

5. Lademanagementvorrichtung nach Anspruch 4, wobei die Steuerungsvorrichtung (200) dazu eingerichtet ist, die Energiezufuhr zum drahtlosen Laden an das Ladedock (120) aus der Vielzahl von Ladedocks (120), das in dem Konstantspannungsmodus geladen wird, zu stoppen und einen Strom in Bezug auf das Ladedock (120) aus der Vielzahl von Ladedocks (120), das in dem Konstantstrommodus geladen wird, so zu steuern, dass dieser niedriger als der voreingestellte Strom des Konstantstrommodus ist, wenn das Ladedockverhältnis größer oder gleich einem dritten eingestellten Verhältnis ist, das größer als das zweite eingestellte Verhältnis ist.

6. Lademanagementvorrichtung nach einem der Ansprüche 1 bis 5, wobei jedes der Vielzahl von Ladeobjekten eine Mobilitätsvorrichtung ist, die ein mobiles Mittel mit einer eingebauten Batterie aufweist, wobei die Vorrichtung dazu eingerichtet ist, die eingebauten Batterien drahtlos zu laden.

7. Lademanagementverfahren einer drahtlosen Ladevorrichtung, umfassend:
Übertragen (S100) von Signalen an eine Vielzahl von Ladeobjekten;
drahtloses Übertragen (S200) von Energie zum drahtlosen Laden an die Vielzahl von Ladeobjekten, wenn eine drahtlose Verbindung zwischen der Vielzahl von Ladeobjekten und einer Ladestation (100) hergestellt ist;
Berechnen (S300) eines Ladedockverhältnisses, das ein Verhältnis einer Anzahl von Ladedocks (120), die mit der Vielzahl von Ladeobjekten beladen sind und in denen ein drahtloses Laden durchgeführt wird, zu einer Gesamtanzahl der Vielzahl von Ladedocks (120) ist;
Bestimmen (400), in welchem Lademodus aus einem Konstantstrommodus und einem Konstantspannungsmodus die Vielzahl von Ladeobjekten zu laden ist, basierend auf dem Ladedockverhältnis, bei dem ein drahtloses Laden durchgeführt wird, und
Steuern einer Energieversorgung, um die Vielzahl von Ladeobjekten in dem bestimmten Lademodus zu laden, wenn die Vielzahl von Ladedocks (120) mit Energie zum drahtlosen Laden versorgt wird,
**dadurch gekennzeichnet, dass**
das Steuern der Energieversorgung, um die Vielzahl von Ladeobjekten in dem bestimmten Lademodus zu laden, umfasst:
Anlegen einer Spannung, die niedriger als eine voreingestellte Spannung des Konstantspannungsmodus ist, an ein Ladedock (120) aus der Vielzahl von Ladedocks (120), das in dem Konstantspannungsmodus geladen wird, und Beibehalten eines Stroms wie er ist in Bezug auf ein Ladedock (120) aus der Vielzahl von Ladedocks (120), das in dem Konstantstrommodus geladen wird, wenn das Ladedockverhältnis gleich oder größer einem voreingestellten ersten eingestellten Verhältnis ist.

8. Verfahren nach Anspruch 7, wobei das Steuern der Energieversorgung, um die Vielzahl von Ladeobjekten in dem bestimmten Lademodus zu laden, umfasst: Stoppen der Energiezufuhr zum drahtlosen Laden an das Ladedock (120) aus der Vielzahl von Ladedocks (120), das in dem Konstantspannungsmodus geladen wird, und Beibehalten des Stroms wie er ist für das Ladedock (120) aus der Vielzahl von Ladedocks (120), das in dem Konstantstrommodus geladen wird, wenn das Ladedockverhältnis größer oder gleich einem zweiten eingestellten Verhältnis ist, das größer als das erste eingestellte Verhältnis ist.

9. Verfahren nach Anspruch 8, wobei das Steuern der Energieversorgung, um die Vielzahl von Ladeobjekten in dem bestimmten Lademodus zu laden, umfasst: Stoppen der Energiezufuhr zum drahtlosen Laden an das Ladedock (120) aus der Vielzahl von Ladedocks (120), das in dem Konstantspannungsmodus geladen wird, und Anlegen eines Stroms, der niedriger als der voreingestellte Strom des Konstantstrommodus ist, an das Ladedock (120) aus der Vielzahl von Ladedocks (120), das in dem Konstantstrommodus geladen wird, wenn das Ladedockverhältnis größer oder gleich einem dritten eingestellten Verhältnis ist, das größer als das zweite eingestellte Verhältnis ist.

10. Computerlesbares Speichermedium, das ein Computerprogramm speichert, das Befehle für einen Prozessor zum Durchführen eines Verfahrens umfasst, wobei das Verfahren umfasst:
Übertragen von Signalen an eine Vielzahl von Ladeobjekten;
Steuern einer Ladestation, um Energie zum drahtlosen Laden an die Vielzahl von Ladeobjekten drahtlos zu übertragen, wenn eine drahtlose Verbindung zwischen der Vielzahl von Ladeobjekten und der Ladestation (100) hergestellt ist;
Berechnen eines Ladedockverhältnisses, das ein Verhältnis einer Anzahl von Ladedocks (120), die mit der Vielzahl von Ladeobjekten beladen sind und in denen ein drahtloses Laden durchgeführt wird, zu einer Gesamtanzahl der Vielzahl von Ladedocks (120) ist;
Bestimmen (400), in welchem Lademodus aus einem Konstantstrommodus und einem Konstantspannungsmodus die Vielzahl von Ladeobjekten zu laden ist, basierend auf dem Ladedockverhältnis, bei dem ein drahtloses Laden durchgeführt wird, und
Steuern einer Energieversorgung, um die Vielzahl von Ladeobjekten in dem bestimmten Lademodus zu laden, wenn die Vielzahl von Ladedocks (120) mit Energie zum drahtlosen Laden versorgt wird,
**dadurch gekennzeichnet, dass**
das Steuern der Energieversorgung, um die Vielzahl von Ladeobjekten in dem bestimmten Lademodus zu laden, umfasst: Anlegen einer Spannung, die niedriger als eine voreingestellte Spannung des Konstantspannungsmodus ist, an ein Ladedock (120) aus der Vielzahl von Ladedocks (120), das in dem Konstantspannungsmodus geladen wird, und Beibehalten eines Stroms wie er ist in Bezug auf ein Ladedock (120) aus der Vielzahl von Ladedocks (120), das in dem Konstantstrommodus geladen wird, wenn das Ladedockverhältnis gleich oder größer einem voreingestellten ersten eingestellten Verhältnis ist.

## Revendications

1. Dispositif de gestion de charge, comprenant :
une borne de charge (100) comprenant une pluralité de stations de charge (120) prévues pour charger une pluralité d'objets à charger ;
un bloc d'alimentation (300) prévu pour alimenter en énergie la pluralité de bornes de charge (120) afin de charger sans fil la pluralité d'objets à charger dans la borne de charge (100) ; et un contrôleur (200) prévu pour déterminer le mode de charge pour charger la pluralité d'objets à charger, sélectionné entre un mode à courant constant et un mode à tension constante en fonction d'un rapport de station de charge où une charge sans fil est effectuée, et prévu pour commander le bloc d'alimentation (300) afin de charger la pluralité d'objets à charger dans le mode de charge déterminé, si l'énergie pour la charge sans fil est fournie à la pluralité de stations de charge (120),
où le rapport de stations de charge est un rapport entre le nombre de stations de charge (120) où la pluralité d'objets à charger sont mis en place et une charge sans fil est effectuée, et le nombre total de la pluralité de stations de charge (120),
**caractérisé en ce que**
le contrôleur (200) est prévu pour commander qu'une tension inférieure à une tension préréglée du mode à tension constante soit appliquée à une station de charge (120) chargée en mode à tension constante parmi la pluralité de stations de charge (120), et pour commander le maintien tel quel d'un courant par rapport à une station de charge (120) chargée en mode à courant constant parmi la pluralité de stations de charge (120), si le rapport de stations de charge est égal ou supérieur à un premier rapport défini préréglé.

2. Dispositif de gestion de charge selon la revendication 1, comprenant en outre un dispositif d'entrée/sortie d'informations prévu pour entrer des informations exigées pour la charge de la pluralité d'objets à charger par un utilisateur,
où le contrôleur (200) est prévu pour calculer le rapport de stations de charge, sur la base des informations de la pluralité d'objets à charger entrées par le dispositif d'entrée/sortie d'informations.

3. Dispositif de gestion de charge selon la revendication 1 ou la revendication 2, comprenant en outre :
un module de transmission prévu pour transmettre à un module de réception de la pluralité d'objets à charger un signal pour une connexion sans fil avec ledit module de réception.

4. Dispositif de gestion de charge selon l'une des revendications 1 à 3, où le contrôleur (200) est prévu pour couper l'alimentation en énergie pour la charge sans fil de la station de charge (120) chargée en mode à tension constante parmi la pluralité de stations de charge (120), et pour commander le maintien tel quel du courant pour la station de charge (120) chargée en mode à courant constant parmi la pluralité de stations de charge (120), si le rapport de stations de charge est supérieur ou égal à un deuxième rapport défini supérieur au premier rapport défini.

5. Dispositif de gestion de charge selon la revendication 4, où le contrôleur (200) est prévu pour couper l'alimentation en énergie pour la charge sans fil de la station de charge (120) chargée en mode à tension constante parmi la pluralité de stations de charge (120), et pour commander un courant inférieur au courant préréglé du mode à courant constant à appliquer à la station de charge (120) chargée en mode à courant constant parmi la pluralité de stations de charge (120), si le rapport de stations de charge est supérieur ou égal à un troisième rapport défini supérieur au deuxième rapport défini.

6. Dispositif de gestion de charge selon l'une des revendications 1 à 5, où chaque objet de la pluralité d'objets à charger est un dispositif de mobilité comprenant une unité mobile pourvue d'une batterie intégrée, ledit dispositif étant prévu pour charger sans filles batteries intégrées.

7. Procédé de gestion de la charge d'un dispositif de charge sans fil, comprenant :
la transmission (S100) de signaux à une pluralité d'objets à charger ;
la transmission sans fil (S200) d'énergie pour la charge sans fil vers la pluralité d'objets à charger, si une connexion sans fil est établie entre la pluralité d'objets à charger et une borne de charge (100) ;
le calcul (S300) d'un rapport de stations de charge, lequel est le rapport entre le nombre de stations de charge (120) où la pluralité d'objets à charger sont mis en place et la charge sans fil est effectuée, et le nombre total de la pluralité de stations de charge (120) ;
la détermination (400) du mode de charge pour la pluralité d'objets à charger, sélectionné entre un mode à courant constant et un mode à tension constante en fonction du rapport de station de charge où une charge sans fil est effectuée, et
la commande d'un bloc d'alimentation afin de charger la pluralité d'objets à charger dans le mode de charge déterminé, si l'énergie pour la charge sans fil est fournie à la pluralité de stations de charge (120),
**caractérisé en ce que**
la commande du bloc d'alimentation pour charger la pluralité d'objets à charger dans le mode de charge déterminé comprend :
l'application d'une tension inférieure à une tension préréglée du mode à tension constante à une station de charge (120) chargée en mode à tension constante parmi la pluralité de stations de charge (120),
et le maintien tel quel d'un courant par rapport à une station de charge (120) chargée en mode à courant constant parmi la pluralité de stations de charge (120), si le rapport de stations de charge est égal ou supérieur à un premier rapport défini préréglé.

8. Procédé selon la revendication 7, où la commande de l'alimentation électrique pour charger la pluralité d'objets à charger dans le mode de charge déterminé comprend : la coupure de l'alimentation électrique pour la charge sans fil de la station de charge (120) chargée en mode à tension constante parmi la pluralité de stations de charge (120), et le maintien tel quel du courant pour la station de charge (120) chargée en mode à courant constant parmi la pluralité de stations de charge (120), si le rapport de stations de charge est supérieur ou égal à un deuxième rapport défini supérieur au premier rapport défini.

9. Procédé selon la revendication 8, où la commande de l'alimentation électrique pour charger la pluralité d'objets à charger dans le mode de charge déterminé comprend : la coupure de l'alimentation en énergie pour la charge sans fil de la station de charge (120) chargée en mode à tension constante parmi la pluralité de stations de charge (120), et l'application d'un courant inférieur au courant préréglé du mode à courant constant à la station de charge (120) chargée en mode à courant constant parmi la pluralité de stations de charge (120), si le rapport de stations de charge est supérieur ou égal à un troisième rapport défini supérieur au deuxième rapport défini.

10. Support d'enregistrement lisible par ordinateur où est stocké un programme informatique comprenant des instructions pour l'exécution d'un procédé par un processeur, ledit procédé comprenant :
la transmission de signaux à une pluralité d'objets à charger ;
la commande d'une station de charge pour une transmission sans fil d'énergie pour une charge sans fil vers la pluralité d'objets à charger, si une connexion sans fil est établie entre la pluralité d'objets à charger et une borne de charge (100) ;
le calcul d'un rapport de stations de charge, lequel est le rapport entre le nombre de stations de charge (120) où la pluralité d'objets à charger sont mis en place et la charge sans fil est effectuée, et le nombre total de la pluralité de stations de charge (120) ;
la détermination (400) du mode de charge pour la pluralité d'objets à charger, sélectionné entre un mode à courant constant et un mode à tension constante en fonction du rapport de station de charge où une charge sans fil est effectuée, et
la commande d'un bloc d'alimentation afin de charger la pluralité d'objets à charger dans le mode de charge déterminé, si l'énergie pour la charge sans fil est fournie à la pluralité de stations de charge (120),
**caractérisé en ce que** la commande du bloc d'alimentation pour charger la pluralité d'objets à charger dans le mode de charge déterminé comprend : l'application d'une tension inférieure à une tension préréglée du mode à tension constante à une station de charge (120) chargée en mode à tension constante parmi la pluralité de stations de charge (120), et le maintien tel quel d'un courant par rapport à une station de charge (120) chargée en mode à courant constant parmi la pluralité de stations de charge (120), si le rapport de stations de charge est égal ou supérieur à un premier rapport défini préréglé.
